# EUROPEAN PATENT APPLICATION

(11) **EP 4 020 066 A1**
(43) Date of publication of application: **29.06.2022**
(21) Application number: 20306667.5
(22) Date of filing: 23.12.2020
(51) Int. Cl.: G02C 7/10, G02F 1/153, G02F 1/161

(54) **OPTICAL DEVICE FORMING AN ELECTROCHROMIC OPHTHALMIC LENS, SPECTACLE GLASSES INCORPORATING IT AND METHOD FOR MANUFACTURING THE SAME**

(71) Applicant: ESSILOR INTERNATIONAL, 94220 Charenton-Le-Pont (FR)
(72) Inventor: BIVER, Claudine, 94220 CHARENTON LE PONT (FR); UHALTE NOGUES, Sira, 94227 CHARENTON-LE-PONT CEDEX (FR); MEYNEN, Mathieu, 94220 CHARENTON LE PONT (FR); MECA, Marion, 94220 CHARENTON LE PONT (FR); PELOUX, Marius, 94220 CHARENTON LE PONT (FR)
(74) Representative: Plasseraud IP

(57) **Abstract**

The invention relates to an optical device for a wearer intended to form an electrochromic ophthalmic lens, spectacle glasses comprising two such lenses fitted on a frame, and a method for manufacturing such an optical device.

The optical device (1) comprises at least one electrochromic cell (3) which comprises a rear shell (4) and a front shell (5) respectively defining for the optical device a backside surface (4b) proximal to at least one eye of the wearer and an opposite front surface (5b), the rear shell and the front shell being provided with at least one pair of transparent electrodes and delimiting a sealed cavity filled with an electrochromic composition (7).

According to the invention, one of the front shell and the rear shell comprises a mineral glass substrate, and the other one comprises an organic polymeric substrate, and the electrochromic cell forms a hybrid mineral-organic ophthalmic lens selected from piano lenses and prescription lenses satisfying a prescription for power correction.

## Description

### FIELD OF THE INVENTION

The present invention relates to an optical device for a wearer intended to form an electrochromic ophthalmic lens, spectacle glasses comprising two such electrochromic ophthalmic lenses fitted on a frame, and a method for manufacturing such an optical device. The invention particularly applies to electrochromic cells for smart eyewears, such as spectacle glasses, which may advantageously form prescription ophthalmic lenses, even though the invention also concerns electrochromic lenses of the piano type or even electrochromic semi-finished lenses.

### DESCRIPTION OF RELATED ART

In a known manner, an electrochromic (EC) cell typically has a structure comprising two transparent outer shells both made of a mineral material or both made of an organic material, on which shells transparent electrically conductive coatings are deposited on inner faces thereof so as to form electrodes. An EC liquid or gel composition usually fills a cavity formed between the facing electrically conductive coatings, the EC composition comprising at least one oxidizing compound and at least one reducing compound that will respectively be reduced and oxidized when an electric field is applied between the electrodes of the cell. Alternatively, only one electrically conductive coating may be provided on a same shell inner face, in which case this conductive coating is divided into two electrodes by structuration on this same shell, for instance with a comb-like structure or an interdigitated structure. At least one of these oxidizing and reducing compounds is an EC compound. It is thus possible to vary the light transmission value of the cell by applying this electric field. The support of the two transparent shells and the sealing of the cavity is usually achieved by means of a peripheral seal.

The EC compound is a material having electrochromic properties, i.e. that changes color between its reduced and oxidized state. It can be a mixture of different EC compounds. When an EC compound is reduced or oxidized, there needs to be another redox active compound that can give or accept the electrons that the EC compound respectively accepts or gives. This other redox active compound can itself be an EC compound.

With such EC cells, it is possible to control the redox state and hence the color of the EC compounds in the cell by applying an electric field between the electrodes. Combining several EC compounds in an EC cell can be useful to adjust the color of the cell when no electric field is applied between the electrodes (passive state) and when such an electric field is applied (active state).

US 2013/293825 A1 relates to an electrochromic optical system comprising an optical substrate and an EC stack forming a glass substrate which is disposed on the optical substrate, wherein the EC stack comprises at least five ceramic layers disposed successively on each other. As visible in Figure 7 of this document, the EC glass substrate is adhered to the optical substrate, such as a lens or a lens blank made of optical glass or plastic, by using an adhesive layer therebetween.

Similarly, EC prescription lenses are known, in which a prescription plastic wafer (e.g. made of a polycarbonate) is adhered in a gluing step to the backside of a piano EC cell including two mineral glass shells (i.e. both having mineral glass substrates) coated on their inner faces with transparent electrically conductive coatings (e.g. of ITO).

A major drawback of the EC optical system disclosed in US 2013/293825 A1 resides in its very specific EC stack which does not contain any liquid or gel composition contrary to most usual EC cells, as explained above, and further in the presence of the required optical substrate which significantly increases the total thickness and weight of the whole EC optical system.

Another drawback of the EC optical system of US 2013/293825 A1 and also of said EC prescription lenses with a mineral EC cell and a prescription plastic wafer, resides in the adhering step of the EC stack or mineral EC cell onto the optical substrate or prescription wafer, which step is delicate because it can introduce some defects which reduce the production yield and increase to the non-quality cost.

US 9 766 528 B2 disclose an EC device for a vehicle mirror, including:
- a first flexible or rigid plastic substrate including front and rear surfaces, wherein the rear surface comprises a first conductive material and the front and/or rear surface(s) comprise(s) a gas diffusion barrier; and
- a second flexible or rigid plastic substrate including front and rear surfaces, wherein the front surface comprises a second conductive material,
wherein the first substrate is joined to the second substrate by a sealing member, where the rear surface of the first substrate and the front surface of the second substrate with the sealing member define a chamber therebetween.

A major drawback of this EC device is that the disclosed laminates for a vehicle mirror having a flat shell are not aimed at obtaining curved EC devices, nor *a fortiori* at obtaining prescription lenses for power correction.

### SUMMARY OF THE INVENTION

An object of the invention is to overcome at least the above-mentioned drawbacks, by providing a new optical device for a wearer comprising at least one electrochromic cell which comprises a rear shell and a front shell respectively defining for the optical device a backside surface proximal to at least one eye of the wearer and an opposite front surface, the rear shell and the front shell being provided with at least one pair of transparent electrodes and delimiting a sealed cavity filled with an electrochromic composition, which allows for the optical device to form an electrochromic lens structure of either piano or prescription type, with an improved trade-off between properties of the lens structure, markedly including its impact resistance, thickness, weight, transparency, homogeneous coloration, barrier properties, and the abrasion resistance on the front side of the lens structure.

According to the invention, this optical device is such that one of the front shell and the rear shell comprises a mineral glass substrate and the other one (i.e. the rear shell or the front shell, respectively) comprises an organic polymeric substrate, so that the electrochromic cell forms a hybrid mineral-organic ophthalmic lens structure selected from plano lenses and prescription lenses satisfying a prescription for power correction.

It is to be noted that this hybrid mineral-organic ophthalmic lens forming the optical device of the invention is preferably such that the front shell and the rear shell are both curved, and that this hybrid mineral-organic ophthalmic lens may thus optionally exhibit any desired base curve determined in relation to a specific total lens power required for a prescription ophthalmic lens, in addition to the above satisfactory trade-off of properties obtainable for the whole lens structure and also specifically for the front side thereof.

It is also to be noted that this hybrid (mineral-organic) EC ophthalmic lens of the invention distinguishes over the full mineral EC ophthalmic lenses of the prior art mentioned above which are available to date (such available mineral EC lenses comprising front and rear shells each based on a mineral glass substrate), by the specific combination of an essentially mineral glass EC front or rear shell (i.e. based on a mineral glass substrate) and an essentially organic polymeric EC rear or front shell (i.e. based on an organic polymeric substrate, such as a plastic substrate).

For the sake of simplicity, the below description of features of the invention will refer to the mineral shell and to the plastic shell of the hybrid ophthalmic lens.

According to another aspect of the invention encompassing any of the foregoing features, the rear or front shell comprises the organic polymeric substrate, which is a monolayer or multilayer, according to a weight fraction which may be greater than 50% and preferably greater than 70%, and the organic polymeric substrate may be based on at least one thermoplastic, thermosetting or photo-cured polymer.

According to a first embodiment, the organic polymeric substrate may be based on at least one transparent thermoplastic polymer for example selected from:
- (meth)acrylic (co)polymers, in particular polymethyl methacrylate (PMMA),
- triacetate of cellulose (TAC),
- polyesters, such as polyethylene furanoate (PEF), polyethylene terephthalate (PET) or polyethylene naphthalate (PEN),
- copolyesters,
- polycarbonate (PC),
- cyclic olefin copolymers (COC),
- cyclic olefin polymers (COP), and
- multilayer films of at least one of these polymers, and/or of at least one of a copolymer of ethylene and vinyl alcohol (EVOH), a poly(vinyl alcohol) (PVA), a polychlorotrifluoroethylene (PCTFE), a polyvinylidene chloride (PVDC) and a polyamide (PA).

According to a second embodiment, the organic polymeric substrate may be based on at least one transparent thermosetting or photo-cured polymer for example selected from polyurethanes, polyurethane/polyureas, polythiourethanes, polyol(allyl carbonate) (co)polymers, polyepisulfides, polyepoxides,

In a preferred embodiment of the invention, the front shell comprises said mineral glass substrate and the rear shell comprises said organic polymeric substrate. In this preferred case, the so-called mineral and plastic shells consist of the front and rear shells, respectively.

As detailed below, this preferred embodiment provides additional specific advantageous properties, compared to the other contemplated case of the invention where the so-called mineral and plastic shells consist of the rear and front shells, respectively.

Advantageously, the optical device of the invention may be devoid of an optical substrate bonded to the front shell or the rear shell, contrary to the above prior art of relating to adhering an EC stack or EC cell to a lens-type separate optical substrate or wafer, thus remedying the above drawback of this prior art by using an organic polymeric substrate to make the rear shell, which may be plano, already have a determined prescription or be a semi-finished lens.

As a consequence, the absence of any separate plastic lens substrate or wafer to be adhered to the optical device allows to reduce the total thickness and weight thereof, and also to avoid a supplementary gluing step and its resulting cosmetic defects as well as non-quality additional cost.

According to an aspect of the invention, the rear shell and the front shell may have curved inner surfaces opposite to the backside surface of the rear shell and to the front surface of the front shell, respectively, the curved inner surfaces being provided with said at least one pair of transparent electrodes which face each other on the rear shell and the front shell, or which are both located on the rear shell or on the front shell.

According to a preferred embodiment of the invention, the curved inner surfaces of the mineral shell (preferably the front shell) and of the plastic shell (preferably the front shell) are provided with said pair of transparent electrodes which face each other on the plastic shell and the mineral shell, respectively.

According to another preferred embodiment of the invention which may encompass the preceding one, at least one transparent electrode is made of an electrically conductive layer comprising at least one of:
- at least one transparent conductive oxide (TCO) deposited by sputtering for example selected from ATO (AISnO), ATZO (AISnZnO), AZO (AlZnO), FTO (FSnO), GZO (GaZnO), ITO (InSnO), ITZO (InSnZnO), IZO (InZnO) and mixtures thereof,
- a deformable electrically conductive nanostructure comprising a metal and for example selected from nanomeshes, nanowires and nanogrids,
- a stack of insulator layer (11) - metal layer (M) - insulator layer (12), where M is for example silver, gold of copper and where l1 is equal to or different from 12,
   the insulator layer (12) in contact with the electrochromic composition (7) comprising a transparent conductive oxide (TCO), for example indium tin oxide (ITO), and
   the other insulator layer (11) comprising a transparent conductive oxide (TCO), for example indium tin oxide (ITO), or being a non-conductive layer for example able to increase light transmission through the stack or able to form a barrier layer, and
- a polymer conductive coating.

Accordingly, the electrically conductive layer may comprise a combination of said transparent conductive oxide(s) (TCO), and of said deformable electrically conductive nanostructure and/or said stack of insulator layer (11) - metal layer (M) - insulator layer (12).

According to a more preferred embodiment of the invention, the curved inner surfaces of the mineral front shell and of the plastic rear shell are provided with said pair of transparent electrodes which face each other on the rear shell and the front shell, respectively, and which are defined by the following combination:
- The inner surface of the mineral front shell comprises, by way of front electrode, said at least one TCO deposited by sputtering (e.g. at least one of ATO, ATZO, AZO, FTO, GZO, ITO, ITZO and IZO), and
- the inner surface of the plastic rear shell comprises, by way of facing rear electrode and optionally in addition to a barrier layer, one said electrically conductive metal nanostructure selected from one or several layer(s) of nanomeshes, nanowires and nanogrids (treated when needed with a conductive coating as at least one passivation layer as explained below, including multilayers made of several superposed electrically conductive layers and alternating passivation layers, to avoid the undesirable reaction of the metal with the oxidizing compound of the EC formulation in the EC cell, it being noted that the passivation layer may be a conductive coating such as an inert metallic layer, e.g. a gold layer).

These nanomeshes and nanowires may be obtained by methods known in the art, including the deposition of a layer of a suspension of the nanostructure in a solvent and subsequent solvent removal, e.g. by drying. Nanogrids may be obtained by photolithography methods applied on metallic layers, as known in the art. These metal nanomeshes, nanowires or nanogrid layers are advantageously also capable of sustaining a high level of deformation without losing their electrical conductivity, compared to existing TCO brittle materials, like e.g. ITO thick coatings conventionally deposited by sputtering.

Advantageously, the passivation layer(s), which may be a passivation monolayer or a passivation multilayer (in the above case of alternating electrically conductive nanostructures and passivation layers), may be:
- deposited on the deformable electrically conductive nanostructure, the passivation layer preferably being an electrically conductive layer such as PEDOT, a gold, rhodium, platinum or palladium-based coating or a transparent conductive oxide (TCO) coating, or else may be
- directly included in said at least one electrically conductive layer, preferably being a mixture (including bilayers or multilayers of more than two layers) of the deformable electrically conductive nanostructure(s) and of one or several electrically conductive layer(s), or a mixture of the deformable electrically conductive nanostructure(s) and of one or several transparent conductive oxide(s) (TCO).

The TCO that can be used in the passivation layer(s) of the invention are generally doped metal oxides with a formula comprising oxygen atoms and at least two other elements in various proportions, such as ATO (AISnO), ATZO (AISnZnO), AZO (AlZnO), FTO (FSnO), GZO (GaZnO), ITO (InSnO), ITZO (InSnZnO), IZO (InZnO), or mixtures thereof.

It is to be noted that TCO-structured electrodes which are usable for the electrically conductive layer are advantageously much less brittle than a full TCO layer.

According to a preferred embodiment of the invention which may encompass any of the foregoing ones, the rear shell and the front shell have curved inner surfaces opposite to the backside surface of the rear shell and to the front surface of the front shell, respectively, the plastic rear shell further comprising a monolayer or multilayer deformable barrier coating on its curved inner surface and/or on said backside surface.

The deformable barrier coating may form a barrier to at least one of oxygen, water vapor and solvents, and is preferably:
- based on at least one polymer derived from alcohol units, such as a copolymer of ethylene and vinyl alcohol (EVOH) or a poly(vinyl alcohol) (PVA), or
- an adhesive layer based on at least one polymer not derived from alcohol units, such as a polyisobutylene (PIB), or
- an inorganic or hybrid organic/inorganic gas barrier coating for example selected from Al₂O₃, Si₃N₄, SN, TiN, SiOₓN_{y}, SiOₓC_{y}, indium tin oxide (ITO), SiO₂, ZnO₂, and TiO₂, where x and y are greater than 0 and lower than or equal to 4.

Such barriers may be applied to the mineral glass substrate (respectively plastic substrate) by physical vapor deposition such as vacuum evaporation or sputtering, plasma-enhanced chemical vapor deposition (PECVD), atomic layer deposition (ALD), or by neutral beam assisted sputtering (NBAS).

It may be noted that the deformable barrier coating is less needed on the mineral glass substrate than on the plastic substrate, and that this barrier coating may even not be needed on said mineral glass substrate.

According to another feature of the invention, the rear shell and the front shell of the hybrid EC lens which are preferably both curved, may be distant from each other by a distance of 10 to 400 µm, preferably of 20 to 250 µm, forming a gap defining said sealed cavity, which is delimited at a periphery thereof by an adhesive seal, said front surface and backside surface for example being convex and concave, respectively.

According to a preferred general embodiment of the invention which may encompass any of the foregoing ones, said hybrid mineral-organic ophthalmic lens satisfies a prescription for at least one power correction and optionally for astigmatism, said backside surface of the rear shell including at least one of a cylindrical, toric and spherical curvature and preferably being a progressive surface when the rear shell comprises said organic polymeric substrate.

According to a specific embodiment of the invention which may relate to the preceding one (i.e. directed to a hybrid EC prescription lens), the rear shell and the front shell may be arranged according to the known Alvarez design for two transmissive plates, in which Alvarez design the rear or front shell is derived from a first surface profile based at least in part on a cubic function and the front or rear shell is respectively derived from a second surface profile based at least in part on an inverse of said cubic function, so that when the rear shell and the front shell are disposed with their respective vertices on an optical axis, an induced phase variation of the rear shell is canceled out by the front shell, the rear shell and the front shell having opposite spherical surfaces.

Advantageously, one initial Alvarez design for said rear shell and said front shell may enable, after edging and cutting both shells of said initial design, to obtain a range of different prescriptions for the hybrid mineral-organic ophthalmic lens of the invention.

According to another feature of the invention which may encompass any of the foregoing ones, the rear shell and the front shell may have curved inner surfaces opposite to the backside surface of the rear shell and to the front surface of the front shell, respectively,
the front shell and/or the rear shell further each comprising at least one of a polarizing film, a photochromic layer, photochromic polarizing layer, a hardcoat, an antireflective coating, an anti-smudge coating, an antifog coating, a blue light cut coating and an antistatic coating, for example on said front surface and/or on said backside surface, and
optionally at least one of the hardcoat and antireflective coating being located on said curved inner surfaces of the front shell and/or the rear shell, respectively.

According to another feature of the invention which may encompass any of the foregoing ones, said electrochromic composition of the hybrid EC lens may be a liquid solution or a gel comprising:
- at least one electrochromic oxidizing agent, for example selected from mono viologens or bis viologens, anthraquinones, benzazoles, imidazo[1,2-α]pyridines, 2,1,3-benzothiadiazoles, imidazoles, benzoselenadiazoles, benzoselenazoles and derivatives thereof, and
- at least one electrochromic reducing compound, for example chosen from derivatives of ferrocene, phenoxazine, phenazine, phenothiazine, thioanthrene, tetrathiafulvalene, and mixtures thereof,
- a solvent such as propylene carbonate,
- a thickener, such as a polyfunctional polymer containing at least two carboxyl moieties, for example chosen from carboxylic acids functional polyester, carboxylic acids functional polyether, carboxylic acids functional polyurethane, carboxylic acids functional polyacrylate, carboxylic acids functional polymethacrylate, carboxylic acids functional polyvinylacetate copolymer, combinations thereof or a reaction products or copolymers thereof (polymethyl methacrylate, polyvinyl acetate or a polyvinyl acetate derivative being particularly usable), and
- Optionally an electrolyte, such as tetra-n-butylammonium tetrafluoroborate (TBA).

It may be noted that said at least one electrochromic oxidizing agent may play the role of an electrolyte, so that it may not be necessary to add the optional electrolyte mentioned above.

Preferably, said sealed cavity is delimited at a periphery thereof by an adhesive seal which is a flexible glue preferably selected from an acrylate, methacrylate, cyanoacrylate, epoxide, polyurethane, polyisobutylene, silicone and a pressure sensitive adhesive.

It is to be noted that all types of EC cells comprising an EC composition are usable in the present invention, preferably being of the so-called "all-in-one-type" ECs which are defined for example in Alesanco et al. (Materials 2018, 11, 414) as EC cells where the EC formulation comprises at least one oxidizing compound and at least one reducing compound that will respectively be reduced and oxidized when an electric field is applied between the electrodes (at least one of these oxidizing and reducing compounds being an EC compound).

According to exemplary embodiments of the EC composition of the hybrid lens:
- said at least one EC oxidizing agent is selected from mono viologens or bis viologens (i.e 4,4'-bipyridinium salts or bis[4,4'-bipyridinium] salts) such as alkylviologens, arylviologens, arylalkylviologens, alkylarylviologens, anthraquinones, benzazoles, imidazo[1,2-α]pyridines, 2,1,3-benzothiadiazoles, imidazoles, benzoselenadiazoles, benzoselenazoles and derivatives thereof, and
- said at least one EC reducing compound is chosen from derivatives of ferrocene, derivatives of phenoxazine, derivatives of phenazine, derivatives of phenothiazine, derivatives of thioanthrene, derivatives of tetrathiafulvalene, and mixtures thereof (for example 10-methylphenothiazine (MePhtz)).

Non limiting examples of such viologen compounds or viologen derivatives, more particularly examples of substituted dialkyl, diaryl 4,4'-bipyridinium salts, substituted dialkyl, diaryl bis[4,4'-bipyridinium] salts and mixtures thereof are described in documents EP2848667A1, EP2848668A1, EP2848669A1, EP2848670A1, EP3115433A1 and EP3345981 A1 whose teachings are incorporated herein. Preferred examples are mentioned herein, such as 1,1'-bis(3-(tert-butyl)phenyl)[4,4'-bipyridine]-1,1'-diium bis(tetrafluoroborate).

In one preferred embodiment, the redox chemical mixture comprises one said reducing compound (such as 10-methylphenothiazine) and at least one EC oxidizing compound, preferably at least two EC oxidizing compounds, for example two or three EC oxidizing compounds, preferably each EC oxidizing compound being independently selected from substituted dialkyl 4,4'-bipyridinium salts, substituted diaryl 4,4'-bipyridinium salts, substituted dialkyl bis[4,4'-bipyridinium] salts or substituted diaryl bis[4,4'-bipyridinium] salts, more preferably the at least two electrochromic oxidizing compounds being at least a substituted diaryl 4,4'-bipyridinium and at least a substituted diaryl bis[4,4'-bipyridinium].

By way of EC composition, mention may be made of a solution comprising a solvent such as propylene carbonate, a thickener as defined above (i.e. such as said polyfunctional polymer containing at least two carboxyl moieties), at least one oxidizing agent and reducing agent as defined above, and an electrolyte such as tetra-n-butylammonium tetrafluoroborate (TBA).

In a known manner, at least part of the EC compounds in the EC cell is contained in a liquid or gel which forms the EC composition and which fills the space between the electrodes to ensure the ionic conduction between them, through the electrolyte (which consists in charged species that can comprise the EC material itself and/or other redox active species and/or other ions devoid of EC properties and of redox activity). The EC composition thus gives at least part of its EC properties to the EC cell.

Optical devices according to the present invention include all ophthalmic devices such as spectacle glasses, sport goggles (e.g. for ski, cycling, motorcycling or other sports using goggles) or an augmented reality device, preferably being spectacle glasses.

It is nonetheless to be noted that an optical device according to the present invention as defined in the appended claims may be a semi-finished ophthalmic device with hybrid EC ophthalmic lens(es), being for example devoid of a frame and/or of an electronic system, batteray and sensors to control the lens(es).

The spectacle glasses of the invention comprise two ophthalmic lenses fitted on a frame, the ophthalmic lenses comprising an optical device as defined above for the invention, wherein each of said two ophthalmic lenses:
- comprises an electrochromic cell which comprises said rear shell and said front shell preferably both curved and defines said backside surface and said opposite front surface, preferably wherein the front shell comprises said mineral glass substrate and the rear shell comprises said organic polymeric substrate, and
- forms said hybrid mineral-organic ophthalmic lens selected from plano lenses and prescription lenses satisfying a prescription for power correction.

Advantageously and as explained above, each of said two ophthalmic lenses may be a prescription lens having for instance a convex front surface and a concave rear surface.

Such spectacle glasses according to the invention make it possible to modify on demand their color and transmittance. In most cases, it is preferred that EC cells have a higher transmittance in the passive state and become darker in the active state. The EC compounds in EC cells are thus preferentially chosen to be colorless or weakly colored in the passive state. It is also often preferred that the combination of the EC compounds in the EC cell gives a neutral color to the EC cell, such as grey or brown, in particular in the active state of the EC cell.

As for the frame on which are fitted the EC ophthalmic lenses of the invention, it advantageously includes an electronic system configured to control theses lenses.

A method according to the invention for manufacturing an optical device as defined above, such as spectacle glasses, comprises:
- computing and designing said one of the rear shell and the front shell which comprises said organic polymeric substrate, for example by digital surfacing, and
- assembling said one fo the rear shell and the front shell which comprises said organic polymeric substrate, to the other front shell or rear shell to form said electrochromic cell by sealing a periphery of said sealing cavity with an adhesive seal and by filling the same with said electrochromic composition, and
- surfacing and/or edging at least said one of the rear shell and the front shell which comprises said organic polymeric substrate.

According to an advantageous embodiment of the invention, this manufacturing method comprises:
- arranging an initial Alvarez assembly of the rear shell and the front shell according to the Alvarez design for two transmissive plates, a blank for the rear or front shell being derived from a first surface profile based at least in part on a cubic function and a blank for the front or rear shell being respectively derived from a second surface profile based at least in part on an inverse of said cubic function so that when the blanks for the rear shell and the front shell are disposed with their respective vertices on an optical axis, an induced phase variation of the rear shell is canceled out by the front shell, the rear shell and the front shell having opposite spherical surfaces, and
- edging and cutting both shells of said initial Alvarez assembly, to obtain a range of different prescriptions for the hybrid mineral-organic ophthalmic lens starting from one said initial Alvarez assembly.

Summing up, the above-mentioned advantageous properties of the hybrid EC lens that forms the optical device of the invention (e.g. spectacle glasses) by combining said plastic shell to said mineral shell, include at least the following ones:
- in case the plastic shell and the mineral shell had TCO (e.g. ITO) electrodes coated on their inner respective surfaces, the hybrid EC lens will exhibit a better transmission and thus transparency than a full plastic EC "witness" lens (i.e. with both plastic rear and front shells), because the TCO coating must be applied onto the plastic shell at a low temperature to avoid a plastic deformation and with quite a high thickness to keep a good conductivity at this low temperature, but the thick TCO coating the plastic becomes partly absorbing and thus less transparent than the same TCO deposited on mineral glass at higher temperature;
- the TCO electrode coating deposited at low temperature on the plastic shell having a higher sheet resistance than that deposited on the mineral shell, it results that the undesirable non-homogeneous coloration on the resulting hybrid EC lens due to the high sheet resistances of both TCO coatings is avoided or at least reduced, in comparison to said full plastic EC "witness" lens including both TCO coatings of higher sheet resistance;
- thanks to its mineral shell, the hybrid EC lens exhibits lower oxygen and moisture diffusion inside the whole lens compared to that of said full plastic EC "witness" lens, in view of EC redox reactions requiring good barriers to oxygen and moisture, which barriers are less satisfactory with plastic substrates than with mineral ones;
- thanks to its mineral front shell, the hybrid EC lens exhibits a better abrasion resistance than said full plastic EC "witness" lens;
- the hybrid EC lens is lighter than said full mineral EC "witness" lens, which improves both the aesthetic and the wearer's comfort (because of the density of a plastic substrate which is significantly lower than that of a mineral substrate, even though the hybrid EC lens may have a thickness equal to or greater than that of a full mineral EC lens); and
- the preferably plastic rear shell allows to improve the impact resistance of the hybrid EC lens, by retaining eventual mineral glass pieces that could break in the mineral front shell, from the front side of the lens, compared to the impact resistance of a full mineral EC "witness" lens having front and rear shells both based on mineral glass substrates.

### BRIEF DESCRIPTION OF THE DRAWINGS

The present invention will be described in more detail by referring to the appended drawings, wherein:
- figure 1 is a perspective view of spectacle glasses including a pair of hybrid EC ophthalmic lenses, and forming an optical device according to the invention;
- figure 2A is a front view of one hybrid EC ophthalmic lens of the spectacle glasses of figure 1;
- figure 2B is a schematic cross-sectional view in the plane IIB-IIB of figure 2A of this hybrid EC ophthalmic lens, which shows an EC cell forming this lens;
- figure 3 is a front view of a hybrid EC ophthalmic lens according to another example of the invention connected to a control circuit by a conductive intermediate element;
- figure 4 is an enlarged schematic cross-sectional view of a hybrid EC ophthalmic lens according to the invention consisting of the EC cell visible in figure 2B, in which a control circuit is positioned directly between two connecting elements;
- figure 5 is a schematic cross-sectional view similar to figure 2B of a hybrid EC ophthalmic lens according to the invention, which shows an EC cell forming this hybrid lens;
- figure 6 is a schematic perspective view of a hybrid EC ophthalmic lens according to the invention, in a specific embodiment of the lens shown in figure 5;
- figure 7A is a schematic cross-sectional view of an Alvarez-type arrangement of the rear shell and front shell according to an embodiment of the invention, configured to provide said hybrid EC ophthalmic lens; and
- figure 7B is a full-scale cross-sectional view of an exemplary embodiment of the Alvarez-type arrangement according to figure 7A, showing it in a horizontal section (EC cell included) for the left half-view and in a vertical section for the right half-view.

### DETAILED DESCRIPTION OF INVENTION AND PREFERRED EMBODIMENTS

The terms "comprise" (and any grammatical variation thereof, such as "comprises" and "comprising"), "have" (and any grammatical variation thereof, such as "has" and "having"), "contain" (and any grammatical variation thereof, such as "contains" and "containing"), and "include" (and any grammatical variation thereof, such as "includes" and "including") are open-ended linking verbs. They are used to specify the presence of stated features, integers, steps or components or groups thereof, but do not preclude the presence or addition of one or more other features, integers, steps or components or groups thereof. As a result, a method, or a step in a method, that "comprises," "has," "contains," or "includes" one or more steps or elements possesses those one or more steps or elements, but is not limited to possessing only those one or more steps or elements.

Unless otherwise indicated, all numbers or expressions referring to quantities of ingredients, ranges, reaction conditions, etc. used herein are to be understood as modified in all instances by the term "about." Also unless otherwise indicated, the indication of an interval of values « from X to Y » or "between X to Y", according to the present invention, means as including the values of X and Y.

### Exemplary hybrid EC ophthalmic lenses according to the invention:

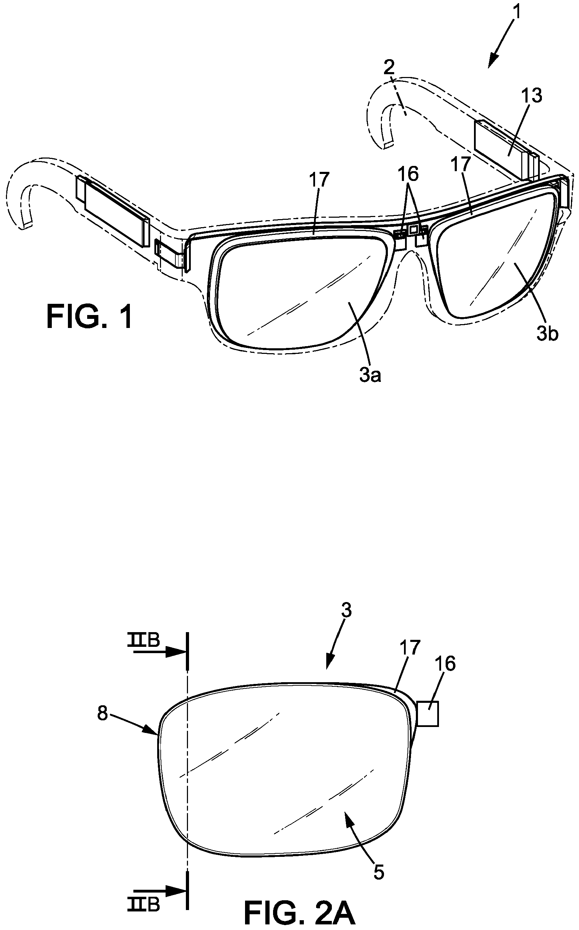

Figures 1-6 and their below description relate to non-limiting examples of EC cells and related ophthalmic devices and related as disclosed in WO 2017/009563 A1 except for the combination of materials selected for the front shell and the rear shell, respectively, which according to the invention are as detailed below.

According to the embodiment represented in figure 1, the ophthalmic device 1 comprises a frame 2 in which two EC cells 3a, 3b are mounted.

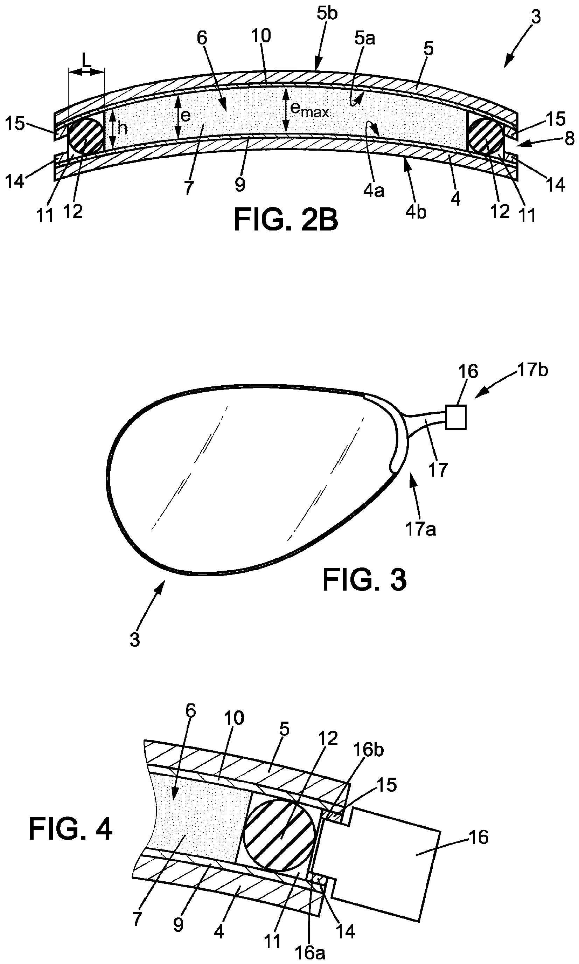

As represented in figure 2B, each EC cell 3 comprises two transparent shells 4, 5 forming outer layers that are advantageously not conductive, delimiting between them a cavity 6 intended to be filled by an electrochromic composition 7.

Thus, each transparent shell 4, 5 comprises an inner face 4a, 5a and an outer face 4b, 5b. Thus, the term "inner" more particularly denotes the faces 4a, 5a delimiting the cavity 6 of the cell 3, and the term "outer" more particularly denotes the faces 4b, 5b outside the cavity 6. The cavity 6 thus has a thickness e between the two inner faces 4a, 5a.

Specifically, a transparent shell 4 which is designed to form by its outer face 4b a backside surface proximal to one eye of a wearer for the resulting hybrid EC ophthalmic lens once worn by the wearer, defines the plastic rear shell 4 of the invention as defined above according to a preferred embodiment thereof, which thus predominantly comprises in weight said organic polymeric substrate of thermoplastic, thermosetting of photo-cured type.

Conversely, the other transparent shell 5 which is designed to form by its outer face 5b an opposite front surface for the resulting hybrid EC ophthalmic lens once worn by a wearer, defines the mineral front shell 5 as defined above according to said preferred embodiment, which thus predominantly comprises in weight said mineral glass substrate.

The transparent shells 4, 5 may also be chosen to filter the ultraviolet radiation, in particular to absorb wavelengths below 420 nm for example. Generally, the material of the shells 4, 5, or the treatment of the inner 4a, 5a and/or outer 4b, 5b faces thereof may enable the shells 4, 5 to have advantageous features, such as enabling colored reflections, a mirror effect, protection with respect to blue light or protection with respect to infrared radiation, without this list being limiting. These outer faces 4b, 5b may also be coated with anti-scratch coatings, antireflective (AR) coatings, anti-smudge coatings, antifog coatings, primer coatings, etc. According to one embodiment, the shells 4, 5 may be colored, photochromic and/or polarized. According to one embodiment, the front shell 5 may be made of a tempered material, so as to increase the mechanical strength thereof.

For example, each of the shells 4, 5 may have a hardcoat, an AR coating, an anti-smudge coating or an antistatic coating on its outer surface 4b, 5b. Some hardcoats or AR coatings may also be used under the electrically conductive coatings 9, 10 described below. Besides, the rear shell 4 and/or the front shell 5 may also include a polarizing film, or a photochromic layer, or even a photochromic polarizing layer.

Preferably, the shells 4, 5 have a thickness of between 50µm and 2000µm, or even between 300µm and 1000µm. The shells 4, 5 may for example be spherical shells, and have in particular a spheroid or ovoid shape delimited by a peripheral edge 8. In particular, the shells 4, 5 are ophthalmic lenses that preferably meet, with the EC composition 7 of the cavity 6, an ophthalmic prescription (RX) of a wearer of the ophthalmic device 1.

According to the invention, at least one inner face 4a, 5a, in particular both inner faces 4a, 5a, of the shells 4, 5 are curved, i.e. they have a non-zero curvature. For example, the inner faces 4a, 5a of the shells 4, 5 may each be concave or convex. Moreover, the outer faces 4b, 5b of the shells 4, 5 may also be curved, and in particular be concave or convex.

The inner face 4a, 5a of each of the transparent shells 4, 5 is at least partially, and preferably completely, covered by an electrically conductive coating 9, 10 as defined above, i.e. which each for example comprises:
- a transparent conductive coating of at least one TCO deposited by sputtering (e.g. at least one of ATO, ATZO, AZO, FTO, GZO, ITO, ITZO and IZO), or
- an electrically conductive nanostructure based on a metal (e.g. silver), selected from nanomeshes, nanowires and nanogrids and, when needed, being treated with at least one passivation layer to avoid reaction of the metal with an EC formulation of the EC cell,
- a stack of insulator layer (11) - metal layer (M) - insulator layer (12), where M is for example silver, gold of copper and where l1 is equal to or different from 12,
   the insulator layer (12) in contact with the electrochromic composition (7) comprising a transparent conductive oxide (TCO), for example indium tin oxide (ITO), and
   the other insulator layer (11) comprising a transparent conductive oxide (TCO), for example indium tin oxide (ITO), or being a non-conductive layer for example able to increase light transmission through the stack or able to form a barrier layer, and/or
- a polymer conductive coating.

It is to be noted that the treatment of the electrically conductive nanostructure with at least one passivation layer (including multilayers made of several superposed electrically conductive layers and alternating passivation layers) may not be needed, in case the electrically conductive nanostructure (e.g. nanowires) which is used is already passivated.

The plastic rear shell 4 may include at least one barrier layer (which may be a monolayer or multilayer barrier coating) on its inner face 4a and/or outer face 4b. The barrier layer(s) of the rear shell 4 may for instance be a barrier to gases (e.g. oxygen) and/or to water vapor, and allow(s) to further protect the EC ophthalmic device 1 and to extend its lifetime.

As disclosed above in a particularly preferred embodiment of the invention, an advantageous combination for the electrically conductive coating 9, 10 of both rear and front shells 4 and 5 may be to provide:
- the plastic rear shell 4 with the combination of the barrier layer disclosed above and of an electrically conductive coating made with metallic nanowires, nanomeshes or nanogrids combined with a conductive polymer layer as a passivation layer, and
- the mineral front shell 5 with a TCO (e.g. ITO) coating exhibiting a satisfactory electrical conductivity.

Specifically, the nanowires or nanomeshes may be applied e.g. by spray coating, bar coating, inkjet coating, spin coating or also by screen printing on flat substrates, or by spray or spin or inkjet coating on curved substrates. The metallic nanogrids may be made by photolithography, and the passivation layer may be applied by various techniques (e.g. from PEDOT or other conductive polymer layers applied by spin, spray, inkjet or bar or screen printing coating processes, from gold or rhodium coating by electrochemical or electroless processes, or from thin layers of TCO such as ITO deposited by PVD, PECVD or sputtering). Silver nanowires or nanomeshes can also be directly included in the polymer conductive coatings, as e.g. in a commercially available mixture of PEDOT and silver nanowires (e.g. from Heraeus).

The curvature radius of the shells 4, 5 are adapted so as to have a constant gap between both shells 4, 5 after assembling them. For assembling the shells 4 and 5, a process similar to one of those knowingly used for mineral glass shells may be used, provided it minimizes the constraints applied on the plastic rear shell 4 to avoid any deformation thereof, particularly if this plastic shell 4 is thin. Nonetheless, other known processes may be used.

The cell 3, and in particular the two transparent shells 4, 5, are held together by a peripheral seal 11. The seal 11 thus completely surrounds the cavity 6. The seal 11 makes it possible to ensure a sufficient thickness e of the cell 3, and also a lack of direct contact between the electrically conductive coatings 9, 10 of each of the shells 4, 5.

The seal 11 has a height h, in particular after assembling the cell 3, between a few tens of micrometers and a few hundreds of micrometers, preferably between 20µm and 400µm, or even more specifically between 80µm and 300µm, or even more specifically still between 90 and 250µm. By way of example, the height h of the seal 11 may be equal to around 200µm. This height h corresponds to the thickness e of the cavity 6 in the vicinity of the peripheral edges 8 of the transparent shells 4, 5, in particular of the peripheral edges of the inner faces 4a, 5a.

More specifically, the height h of the seal 11 as represented in figure 2B corresponds to a seal 11 which is not deposited on connecting elements 14, 15 as will be described below. However, in one embodiment in which the seal 11 is deposited, in particular partially, on connecting elements 14, 15 the height h corresponds to the height of the seal 11 and to the height of the connecting elements 14, 15 taken together.

Moreover, the width L of the seal 11 is preferably less than 5000µm for a goggle application or less than 1000µm for an ophthalmic lens, or even less than 3000µm for a goggle and less than 800µm for an ophthalmic lens. Thus, when the ophthalmic device 1 is installed in a frame 2, the seal 11 will not be visible and will not limit the visual field of the wearer or the useful area of the ophthalmic device 1.

The term "width" denotes the size of an element extending in a plane substantially parallel to the inner faces 4a, 5a of the transparent shells 4, 5. The term "height" or "thickness" denotes the size of an element extending in a direction substantially transverse to the inner faces 4a, 5a of the shells 4, 5.

The seal 11 is made from an adhesive material 20 which maintains the cohesion between the two transparent shells 4, 5. The adhesive material 20 may be any flexible glue able to sustain the deformation during the selected assembling process.

According to an embodiment, the adhesive material 20 may be a flexible glue selected from an acrylate, methacrylate, cyanoacrylate, epoxide, polyurethane, polyisobutylene or silicone glue, preferably a polyisobutylene, cationic epoxy, epoxy-amine, epoxy-anhydride or oxime silicone glue. The adhesive material 20 may alternatively be a pressure sensitive adhesive that can be applied like a hotmelt adhesive solvent-based or not.

The adhesive material 20 is preferably a light- and/or thermally-polymerizable resin, and may in particular be a polyisobutylene pressure sensitive adhesive or a cationically initiated epoxy resin. Except for a polyisobutylene glue, such a resin (e.g. a cationic epoxy) may be crosslinked by exposure to light and/or by thermal heating as will be described subsequently. A filled epoxy resin, once crosslinked, makes it possible to obtain a seal 11 having a good mechanical strength. Moreover, the seal 11 thus obtained is watertight and airtight.

According to one embodiment, the adhesive material 20 is compatible, or inert, with respect to the EC composition 7, namely does not induce a chemical interaction or a degradation of the EC composition 7.

According to one embodiment, the adhesive material 20 comprises spacing elements 12, such as glass beads or polymer beads. The spacing elements 12 are electrically isolating. In particular, the spacing elements 12 of the adhesive material 20 are in contact with each of the inner faces 4a, 5a of the shells 4, 5. The spacing elements 12 thus make it possible to define and control the height h of the seal 11 and therefore to obtain a sufficient thickness e of the cavity 6. When using a drop filling process, the spacing elements 12 may not be needed (the thickness is controlled in this case by the volume of liquid which is dispensed on one surface and by the height of the seal 11).

According to one embodiment, the adhesive material 20 also comprises a thixotropic agent. Such a thixotropic agent makes it possible to optimize the shape of the seal 11 by controlling the amount of adhesive material 20 deposited on one of the shells 4, 5.

The thixotropic agent makes it possible in particular to obtain a satisfactory ratio between the height h and the width L of the seal 11. It is thus possible to obtain a cavity 6 having a sufficient thickness e, while minimizing the width L of the seal 11. This makes it possible to avoid an edge effect, that is to say a local spreading of the adhesive material 20 during the deposition thereof on the shell 4, 5, which would lead to a significant increase in the width L of the seal 11. As represented for example in figure 2B, the seal extends perpendicularly to the inner faces 4a, 5a, of the transparent shells 4, 5.

Furthermore, the thixotropic agent makes it possible to deposit the seal on curved surfaces while controlling the ratio between the height h and the width L of the seal. Thus, the cross section of the seal (height h and width L) remains substantially constant, even if the seal is deposited along a complex line on a curved surface, since the control of the rheology of the seal prevents the latter from spreading or slumping and does not lead to leak-tightness or esthetic defects. Other additives can be used in the adhesive material 20, such as fillers, e.g. carbon black that can color the seal, etc.

The electrically conductive coatings 9, 10 of each of the shells 4, 5 form electrodes which are not in direct contact with one another and are intended to be electrically connected to an external electrical source 13, such as a battery as represented in figure 1.

For this purpose, a connecting element 14, 15 (also referred to as a "bus"), that is in particular metallic may be deposited at the periphery of each of the shells 4, 5 in direct contact with each conductive coating 9, 10. Each of the connecting elements 14, 15 partially, and in particular completely, surrounds each shell 4, 5 at its peripheral edge 8 and in particular at the edge face of the cell 3. Each of the connecting elements 14, 15 is in particular positioned at the peripheral edge 8 of each of the shells 4, 5, forming in particular an equipotential around each of the shells 4, 5. The connecting elements 14, 15 are for example made of copper, of gold, of silver or of nickel. Preferably, the connecting elements 14, 15 are passivated so as not to interact with the EC composition 7 and in order to prevent their corrosion.

Each of the connecting elements 14, 15 is positioned outside of the cavity 6 formed by the cell 3 and is not therefore in contact with the EC composition 7 filling the cavity 6. As a variant, the seal 11 may cover, at least partially, the connecting elements 14, 15.

The seal 11 is positioned between the cavity 6 and each of the connecting elements 14, 15. In other words, the circumference of the seal 11 is smaller than the circumference of each connecting element 14, 15. Each of the connecting elements 14, 15 is thus isolated, in particular electrically isolated, from the EC composition 7, in order to prevent any local malfunction of the cell 3.

Each connecting element 14, 15 preferably has a width of between 500µm and 1500µm for goggles. Each connecting element 14, 15 additionally preferably has a height of between 0.5µm and 50µm, preferentially between 1 and 30µm, more preferentially still between 1 and 25µm. The total thickness of the two connecting elements 14, 15 is inevitably less than the thickness e of the cell 3, so that these two connecting elements 14 and 15 are not in contact with one another.

In order to ensure the electrical operation of the cell 3, each connecting element 14, 15 is electrically connected to a control circuit 16. The control circuit 16 is for example a miniaturized electronic control board equipped with a microcontroller that makes it possible to control the switching on, turning off and/or transmission level of the cell 3.

According to one embodiment represented for example in figure 4, the control circuit 16 is positioned directly between the two connecting elements 14, 15. The seal 11 is then not in contact with this control circuit 16 and does not interfere therewith. The control circuit 16 also comprises two faces 16a, 16b, each of the faces 16a, 16b being electrically connected, in particular in direct contact or with the aid of a conductive glue or a conductive adhesive, with a connecting element 14, 15. According to this embodiment, the height of the control circuit 16 between its two faces 16a, 16b is then equal to the thickness e of the cavity of the cell 3 minus the thickness of the connecting elements 14, 15.

According to another embodiment as represented in figure 3, the control circuit 16 is not positioned directly between the two connecting elements 14, 15. The ophthalmic device 1 then comprises a conductive intermediate element 17 (also referred to as "flex"). The conductive intermediate element 17 is preferably positioned on the nasal or temporal side of the frame 2 of the ophthalmic device 1 as represented in figure 1.

According to this embodiment, the conductive intermediate element 17 is electrically connected at a first end 17a to each of the connecting elements 14, 15 independently. The conductive intermediate element 17 may be in contact with a relatively extensive surface of each of the connecting elements 9, 10. According to this embodiment, the conductive intermediate element 17 may for example partially adopt the shape of the peripheral edge 8 of the shells 4, 5 in order to facilitate the assembling thereof with the cell 3.

The conductive intermediate element 17 may thus partially or completely surround the peripheral edge 8 of each of the shells 4, 5. According to this embodiment in which the conductive intermediate element 17 completely surrounds the peripheral edges 8 of the shells 4, 5, it is not then necessary for the cell 3 to comprise connecting elements 14, 15, the conductive intermediate element 17 acting as connecting elements 14, 15.

Thus, as a variant, the cell 3 may not comprise connecting elements 14, 15, especially when the coatings 9, 10 described above are made from a sufficiently conductive material.

The conductive intermediate element 17 is also electrically connected at a second end 17b to the control circuit 16 to enable the operation of the cell 3 to be controlled.

To prepare a complete EC polymer device such as the EC cell 3 disclosed above, a standard EC cell assembly/ filling process is implemented either by the drop filling (DF) technique, or by the backfilling technique (BF).

An electrically conductive track around each side of the lens may be needed to maintain a constant potential around the lens. This conductive track can be applied for instance by dispensing a metallic ink, like silver ink, directly on the electrically conductive layers before or after the assembling process (with which this ink should be compatible).

### Methods for manufacturing a hybrid EC ophthalmic device of the invention:

The following exemplary methods illustrate the present invention in a more detailed, but non-limiting manner.

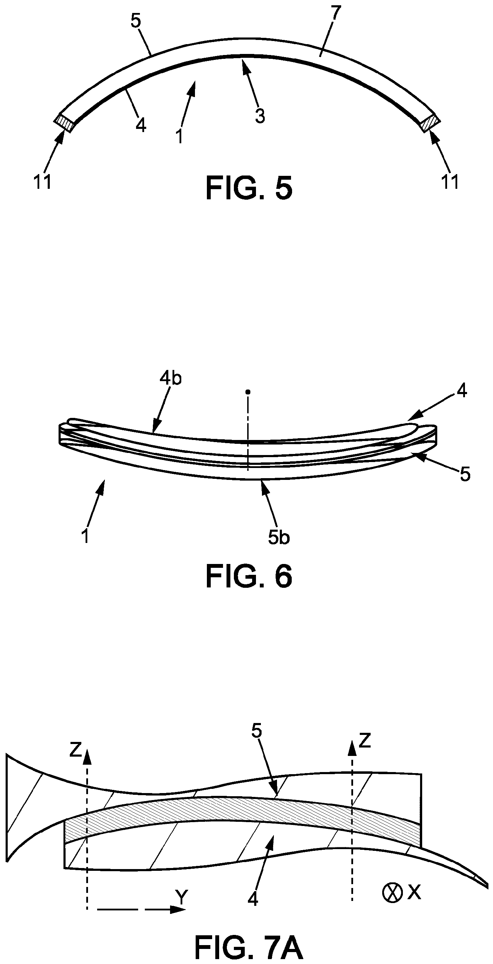

As visible in figure 5, the rear and front shells 4, 5 are assembled together with the adhesive seal 11 to form the EC cell 3 and the resulting EC ophthalmic lens, which cell 3 is filled with the EC liquid or gel composition 7. As explained above, the plastic rear shell 4 may be plano, already have a determined prescription (RX) or be a semi-finished lens.

Using a plastic rear shell 4 particularly enables to have access to Digital Surfacing (DS) technologies, which means to be able to compute and manufacture more complex surfaces (e.g. a surface fitting) and also to have access to the technologies mainly used in ophthalmic plants.

In case edging is implemented, a bevel or other solution to achieve the integration of the wafer into a frame may be worn by the plastic rear shell 4, which is machined with a standard edging machine. The EC cell may thus be correctly fitted into the frame.

Given that some conductive coatings are brittle and may not sustain the constraints applied during the surfacing and/or edging process(es), such conductive coatings may then be applied after the surfacing or after the edging of the plastic rear shell 4.

According to an exemplary embodiment of the invention, a plastic rear shell already assembled with a mineral front shell is cut. Generally, data for mounting are integrated in the edging step, and therefore are integrated in the calculation of the surface, so as to have wearer data before this calculation.

Figure 6 shows in an exemplary and non-limiting embodiment for the mineral front shell 5 and the plastic rear shell 4, respectively, showing the backside surface 4b and the front surface 5b of the hybrid EC ophthalmic lens.

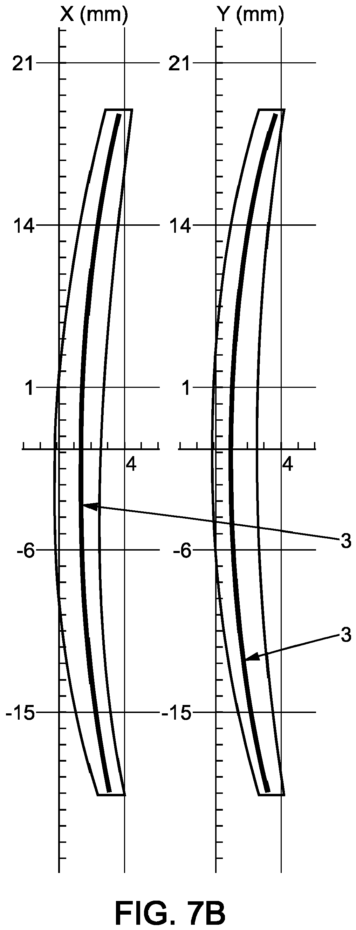

According to another embodiment of the invention, an Alvarez design such as that visible in diagrammatical figure 7A and full-scale figure 7B (see the EC cell 3 visible in both half-views of figure 7B) is used for obtaining the arrangement of the plastic rear shell 4 and the mineral front shell 5 in one operation of prescription add-on and assembly. An Alvarez exemplary design for ophthalmic lenses, which design knowingly originates from document US 3,305,294 A, is for example disclosed in the Internet website https://www.laserfocusworld.com/optics/article/16555776/alvarez-lens-enters-the-real-world.

Specifically, the method for obtaining this arrangement includes a step of arranging an initial Alvarez assembly of rear shell and front shell blanks according to the Alvarez design for two transmissive plates. By definition of an Alvarez assembly, the rear or front shell blanks are derived from a first surface profile based on a cubic function (i.e. phase contours for a diffractive Alvarez plate result from the cubic function z = ax³ - bx - cy³ + dy) and the front or rear shell blanks are respectively derived from a second surface profile based on an inverse of said cubic function, according to the orthonormal coordinate system (XYZ) shown in figure 7A.

According to the prescriptions RX to be obtained for the wearers, the edging of the plastic rear shell blank is adapted in order to get the right power for the hybrid lens. In this case visible in the example of figure 7A, the prescriptions RX are obtained with spherical shells wearing an Alvarez design on the opposed surface.

In a second step, one shell blank is positioned with respect to the other shell blank by:
- translations according to the X axis and according to the orthogonal Y axis, to manage power and astigmatism, respectively, and
- a rotation according to the Z axis to manage the axis of the cylinder (the thickness direction Z of the shells 4, 5 being transverse to both curvatures thereof, and the height direction X of the shells 4, 5 being perpendicular to the plane of figure 7A which includes both length direction Y and thickness direction Z).

The front shell blank was fixed, and the rear shell blank was edged with a different centering position, in order to get at the end different powers from exactly the same original blanks.

Alternatively, it is possible to edge at the same time both shells blanks, once correctly assembled.

In other words, both shells blanks of an initial Alvarez assembly are edged and cut to obtain said rear and front shells 4 and 5, which advantageously allows to manage a range of different prescriptions RX for the hybrid lens of the invention starting from just one reference of rear and front shell blanks according to the initial Alvarez assembly.

It is to be noted that thanks to this Alvarez embodiment, the backside surface 4b of the rear shell 4 of the hybrid lens may thus advantageously be manufactured on demand by Digital Surfacing with the correct geometry, in order to obtain the required RX prescription.

## Claims

1. Optical device (1) for a wearer, comprising at least one electrochromic cell (3) which comprises a rear shell (4) and a front shell (5) and respectively defining for the optical device (1) a backside surface proximal to at least one eye of the wearer and an opposite front surface, the rear shell (4) and the front shell (5) being provided with at least one pair of transparent electrodes (9 and 10) and delimiting a sealed cavity (6) filled with an electrochromic composition (7),
wherein one of the front shell and the rear shell comprises a mineral glass substrate and the other one comprises an organic polymeric substrate, and
wherein the electrochromic cell forms a hybrid mineral-organic ophthalmic lens selected from plano lenses and prescription lenses satisfying a prescription for power correction.

2. The optical device (1) of claim 1, wherein the front shell (5) comprises said mineral glass substrate and the rear shell (4) comprises said organic polymeric substrate, the optical device being preferably devoid of an optical substrate bonded to the front shell or the rear shell.

3. The optical device (1) of claim 1 or 2, wherein the rear shell (4) and the front shell (5) both curved are distant from each other by a distance of 10 µm to 400 µm, preferably of 20 to 250 µm, forming a gap defining said sealed cavity (6), which is delimited at a periphery thereof by an adhesive seal (11), said front surface and said backside surface for example being convex and concave, respectively.

4. The optical device (1) of any of preceding claims, wherein said hybrid mineral-organic ophthalmic lens satisfies a prescription for at least one power correction and also optionally for astigmatism, said backside surface of the rear shell including at least one of a cylindrical, toric and spherical curvature and preferably being a progressive surface when the rear shell comprises said organic polymeric substrate.

5. The optical device (1) of claim 4, wherein the rear shell (4) and the front shell (5) are arranged according to the Alvarez design for two transmissive plates, in which Alvarez design the rear or front shell is derived from a first surface profile based at least in part on a cubic function and the front or rear shell is respectively derived from a second surface profile based at least in part on an inverse of said cubic function, so that when the rear shell and the front shell are disposed with their respective vertices on an optical axis, an induced phase variation of the rear shell is canceled out by the front shell, the rear shell and the front shell having opposite spherical surfaces, and
wherein one initial Alvarez design for said rear shell and said front shell enables, after edging and cutting both shells of said initial design, to obtain a range of different prescriptions for the hybrid mineral-organic ophthalmic lens.

6. The optical device (1) of any of preceding claims, wherein the rear shell (4) and the front shell (5) have curved inner surfaces (4a and 5a) opposite to the backside surface of the rear shell and to the front surface of the front shell, respectively, the curved inner surfaces being provided with said at least one pair of transparent electrodes (9 and 10) which face each other on the rear shell (4) and the front shell (5), or which are both located on the rear shell (4) or on the front shell (5),
and preferably wherein each electrode of said at least one pair of transparent electrodes (9 and 10) is made of an electrically conductive layer comprising at least one of:
- at least one transparent conductive oxide (TCO) deposited by sputtering for example selected from ATO (AISnO), ATZO (AISnZnO), AZO (AlZnO), FTO (FSnO), GZO (GaZnO), ITO (InSnO), ITZO (InSnZnO), IZO (InZnO) and mixtures thereof,
- a deformable electrically conductive nanostructure comprising a metal and for example selected from nanomeshes, nanowires and nanogrids, and
- a stack of insulator layer (11) - metal layer (M) - insulator layer (12), where M is for example silver, gold of copper and where l1 is equal to or different from 12,
the insulator layer (12) in contact with the electrochromic composition (7) comprising a
transparent conductive oxide (TCO), for example indium tin oxide (ITO), and
the other insulator layer (11) comprising a transparent conductive oxide (TCO), for example indium tin oxide (ITO), or being a non-conductive layer for example able to increase light transmission through the stack or able to form a barrier layer.

7. The optical device (1) of any of preceding claims, wherein the rear shell comprises the organic polymeric substrate, which is a monolayer or multilayer, according to a weight fraction greater than 50% and preferably greater than 70%, the organic polymeric substrate being based on at least one thermoplastic, thermosetting or photo-cured polymer.

8. The optical device (1) of claim 7, wherein the organic polymeric substrate is based on at least one transparent thermoplastic polymer for example selected from:
- (meth)acrylic (co)polymers, in particular polymethyl methacrylate (PMMA),
- triacetate of cellulose (TAC),
- polyesters, such as polyethylene furanoate (PEF), polyethylene terephthalate (PET) or polyethylene naphthalate (PEN),
- copolyesters,
- polycarbonate (PC),
- cyclic olefin copolymers (COC),
- cyclic olefin polymers (COP), and
- multilayer films of at least one of these polymers, and/or of at least one of a copolymer of ethylene and vinyl alcohol (EVOH), a poly(vinyl alcohol) (PVA), a polychlorotrifluoroethylene (PCTFE), a polyvinylidene chloride (PVDC) and a polyamide (PA).

9. The optical device (1) of claim 7, wherein the organic polymeric substrate is based on at least one transparent thermosetting or photo-cured polymer for example selected from polyurethanes, polyurethane/polyureas, polythiourethanes, polyol(allyl carbonate) (co)polymers, polyepisulfides, polyepoxides,

10. The optical device (1) of any of claims 2 and 7-9, wherein the rear shell (4) and the front shell (5) have curved inner surfaces (4a and 5a) opposite to the backside surface of the rear shell and to the front surface of the front shell, respectively,
the rear shell further comprising a deformable barrier coating on its curved inner surface and/or on said backside surface, the deformable barrier coating forming a barrier to at least one of oxygen, water vapor and solvents and preferably being:
- based on at least one polymer derived from alcohol units, such as a copolymer of ethylene and vinyl alcohol (EVOH) or a poly(vinyl alcohol) (PVA), or
- an adhesive layer based on at least one polymer not derived from alcohol units, such as a polyisobutylene (PIB), or
- an inorganic or hybrid organic/inorganic gas barrier coating for example selected from Al₂O₃, Si₃N₄, SN, TiN, SiOₓN_{y}, SiOₓC_{y}, indium tin oxide (ITO), SiO₂, ZnO₂, and TiO₂, where x and y are greater than 0 and lower than or equal to 4.

11. The optical device (1) of any of preceding claims, wherein the rear shell (4) and the front shell (5) have curved inner surfaces (4a and 5a) opposite to the backside surface of the rear shell and to the front surface of the front shell, respectively,
the front shell and/or the rear shell further each comprising at least one of a polarizing film, a photochromic layer, photochromic polarizing layer, a hardcoat, an antireflective coating, an anti-smudge coating, an antifog coating, a blue light cut coating and an antistatic coating, for example on said front surface and/or on said backside surface, and
optionally at least one of the hardcoat and antireflective coating being located on said curved inner surfaces of the front shell and/or the rear shell, respectively.

12. The optical device (1) of any of preceding claims, wherein said electrochromic composition (7) is a liquid solution or a gel comprising:
- at least one electrochromic oxidizing agent, for example selected from mono viologens or bis viologens, anthraquinones, benzazoles, imidazo[1,2-α]pyridines, 2,1,3-benzothiadiazoles, imidazoles, benzoselenadiazoles, benzoselenazoles and derivatives thereof, and
- at least one electrochromic reducing compound, for example chosen from derivatives of ferrocene, phenoxazine, phenazine, phenothiazine, thioanthrene, tetrathiafulvalene, and mixtures thereof,
- a solvent such as propylene carbonate,
- a thickener such as polymethyl methacrylate, polyvinyl acetate or a polyvinyl acetate derivative, and
- optionally an electrolyte, such as tetra-n-butylammonium tetrafluoroborate (TBA), and wherein said sealed cavity (6) is delimited at a periphery thereof by an adhesive seal (11) which is a flexible glue preferably selected from an acrylate, methacrylate, cyanoacrylate, epoxide, polyurethane, polyisobutylene, silicone and a pressure sensitive adhesive.

13. Spectacle glasses comprising two ophthalmic lenses fitted on a frame, wherein the ophthalmic lenses comprise an optical device (1) as claimed in any of preceding claims, each of said two ophthalmic lenses comprises an electrochromic cell (3) which comprises said rear shell (4) and said front shell (5) preferably both curved and respectively defining for each of said two ophthalmic lenses said backside surface and said opposite front surface,
preferably wherein the front shell comprises said mineral glass substrate and the rear shell comprises said organic polymeric substrate,
and wherein each of said two ophthalmic lenses forms said hybrid mineral-organic ophthalmic lens selected from plano lenses and prescription lenses satisfying a prescription for power correction.

14. Method for manufacturing an optical device (1) according to any of claims 1-12, wherein the method comprises:
- computing and designing said one of the rear shell (4) and the front shell (5) which comprises said organic polymeric substrate, for example by digital surfacing, and
- assembling said one of the rear shell and the front shell which comprises said organic polymeric substrate, to the other front shell or rear shell to form said electrochromic cell by sealing a periphery of said sealing cavity (6) with an adhesive seal (11) and by filling the same with said electrochromic composition (7), and
- surfacing and/or edging at least said one of the rear shell and the front shell which comprises said organic polymeric substrate.

15. The manufacturing method of claim 14, wherein the method comprises:
- arranging an initial Alvarez assembly of the rear shell (4) and the front shell (5) according to the Alvarez design for two transmissive plates, the rear or front shell being derived from a first surface profile based at least in part on a cubic function and the front or rear shell being respectively derived from a second surface profile based at least in part on an inverse of said cubic function so that when the rear shell and the front shell are disposed with their respective vertices on an optical axis, an induced phase variation of the rear shell is canceled out by the front shell, the rear shell and the front shell having opposite spherical surfaces, and
- edging and cutting both shells of said initial Alvarez assembly, to obtain a range of different prescriptions for the hybrid mineral-organic ophthalmic lens starting from one said initial Alvarez assembly.
